(19) **Europäisches Patentamt European Patent Office Office européen des brevets**

(11) **EP 4 737 848 A1**

(12) **EUROPEAN PATENT APPLICATION**

(43) Date of publication:
06.05.2026 Bulletin 2026/19

(51) International Patent Classification (IPC):
**G01C 1/04** *(2006.01)* **G01C 15/00** *(2006.01)*
**G01S 17/66** *(2006.01)*

(21) Application number: 25212396.3

(22) Date of filing: 30.10.2025

(52) Cooperative Patent Classification (CPC):
**G01C 15/002; G01C 1/04; G01S 17/66**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 31.10.2024 JP 2024192406

(71) Applicant: Topcon Corporation
Tokyo 174-8580 (JP)

(72) Inventors:
• **MOMIYAMA, Homare**
Tokyo (JP)
• **SHIGETA, Masahiro**
Tokyo (JP)
• **MAO, Zaixing**
Tokyo (JP)

(74) Representative: **Schmitt-Nilson Schraud Waibel
Wohlfrom
Patentanwälte Partnerschaft mbB
Pelkovenstraße 143
80992 München (DE)**

(54) **SURVEYING SYSTEM**

(57) [Problem] To provide a relatively inexpensive surveying system equipped with an automatic locking function.

[Solution] Provided is a surveying system 1 comprising: a distance meter 11 integrated with a telescope 6c and configured to transmit distance-measuring light to a prism 8 and receive reflected light from the prism along with a collimation axis A of the telescope 6c, to measure a distance to a center of the prism 8; an angle detector 12 configured to detect angle of the collimation axis A; a rotation drive unit 13 configured to rotate the telescope 6c; a camera 14 having a wider angle of view than a field of view of the telescope 6c, and configured to acquire an image in front of the telescope 6c; and a control arithmetic unit 30 including at least one electronic circuit and at least one memory, and configured to calculate coordinates of the center of the prism 8 based on the distance and angle detected; wherein the control arithmetic unit 30 sets a wearable article worn by an operator as a first preliminary target, wherein the control arithmetic unit 30 detects a person in the image to output an area including the person as a candidate of an operator who holds the prism 8, detects the first preliminary target in the area, calculate a preliminary rotation angle for preliminary orienting the telescope toward the prism based on a position of the first preliminary target in the image, and rotate the telescope 6c by the preliminary rotation angle.

FIG. 1

# EP 4 737 848 A1

**Description**

TECHNICAL FIELD

The disclosure relates to surveying systems, and more specifically, to surveying systems with an automatic locking function.

BACKGROUND

Modern surveying instruments come equipped with automatic sighting function to sight a prism automatically and automatic tracking function to track a prism automatically. Such surveying instruments have automatic locking functions to rotate a collimation axis toward a prism prior to locking the prism, at the start of measurement or in the event of losing the prism while tracking.

Patent literatures 1 and 2 disclose techniques implementing such automatic locking function. Patent literature 1 discloses a surveying system comprising a remote catcher with a light transmitter for transmitting fan beam and a surveying instrument with a light receiver for receiving the beam. At the start of measurement or in the event of losing a prism while tracking, an operator, who is holding the prism, makes the remote catcher transmit fan beam so that the surveying instrument receives the beam and rotates to the direction of the beam's arrival, to orient the collimation axis toward the prism. Patent Literature 2 discloses a surveying instrument configured to, at the start of measurement or in the event of losing a prism while tracking, search for the prism by rotating the telescope in a spiral pattern outward from the center to lock the prism within the telescope's field of view.

Citation List

Patent Literature

    Patent Literature 1: JP 2005/214854 A1
    Patent Literature 2: JP 2016/138802 A1

SUMMARY

Technical Problem

However, the surveying system of Patent Literature 2 has a problem that it takes time to search for the prism. The surveying system of Patent Literature 1 requires additional hardware such as devices for transmitting and receiving fan beam and communication devices, in addition to software, resulting in high implementation costs. On the other hand, in recent years, surveying instruments equipped with cameras have become increasingly common. Thus, there has been a demand for surveying systems equipped with automatic locking function at a relatively low cost by using cameras.

The technique of the present disclosure has been made in view of the above circumstances and aims to provide surveying systems equipped with automatic locking function at a relatively low cost.

Solution to Problem

To achieve the above object, a surveying system according to an aspect of the present disclosure comprises: a distance meter integrated with a telescope and configured to transmit distance-measuring light to a prism and receive reflected light from the prism along with a collimation axis of the telescope, to measure a distance to a center of the prism; an angle detector configured to detect angle of the collimation axis; a rotation drive unit configured to rotate the telescope; a camera having a wider angle of view than a field of view of the telescope, and configured to acquire an image in front of the telescope; and a control arithmetic unit including at least one electronic circuit and at least one memory, and configured to calculate coordinates of the center of the prism based on the distance and angle detected; wherein the control arithmetic unit sets a wearable article worn by an operator as a first preliminary target, wherein the control arithmetic unit detects a person in the image to output an area including the person as a candidate of an operator who holds the prism, detects the first preliminary target in the area, calculate a preliminary rotation angle for preliminary orienting the telescope toward the prism based on a position of the first preliminary target in the image, and rotate the telescope by the preliminary rotation angle.

2

## BRIEF DESCRIPTION OF DRAWINGS

Various aspects and embodiments of the application will be described with reference to the following figures. Items appearing in multiple figures are indicated by the same or a similar reference number in all the figures in which they appear.

FIG. 1 is an outline diagram illustrating the use state of a surveying system according to a first embodiment of the disclosure.

FIG. 2 is a block diagram of the same system.

FIG. 3 is a flowchart describing an example of processing of automatic locking function of the same system.

FIGs. 4A to 4C illustrate processes of the automatic locking function of the same system.

FIGs. 5A to 5C illustrate processes of the automatic locking function of the same system.

FIG. 6 is a flowchart describing a detailed processing of a preliminary-rotation angle calculation for the automatic locking function.

FIGs. 7A and 7B illustrate setting of the position of the preliminary target for the same preliminary-rotation angle calculation.

FIG. 8 illustrates a calculation method for a vertical preliminary-rotation angle of the preliminary rotation angle.

FIG. 9 is a block diagram of a surveying system according to a second embodiment of this disclosure.

FIG. 10 is a block diagram of a surveying system according to a modification of the same embodiment.

FIG. 11 is a block diagram of a surveying system according to another modification of the same embodiment.

FIG. 12A illustrates an example of prism position data used in the same modification and FIG.12B illustrates an example of guide mark applied to the same modification.

FIG. 13 illustrates another example of an image used as the basis for the reference data of the surveying system.

FIG. 14 is a block diagram of a surveying system according to still another modification of the second embodiment.

FIG. 15 shows results of a detection accuracy comparison experiment for Working Example 1.

FIG. 16 shows results of the detection accuracy comparison experiment for Comparative Example 1.

## ADVANTAGES OF INVENTION

According to the above aspects, it is possible to provide relatively inexpensive surveying systems equipped with automatic locking functions.

## DESCRIPTION OF EMBODIMENTS

Hereinafter, preferred embodiments of the present disclosure will be described with reference to the drawings, but the present invention is not limited thereto. In each embodiment, the same items are denoted by the same reference and redundant description will be appropriately omitted.

1. First Embodiment

(Overview of Surveying System 1)

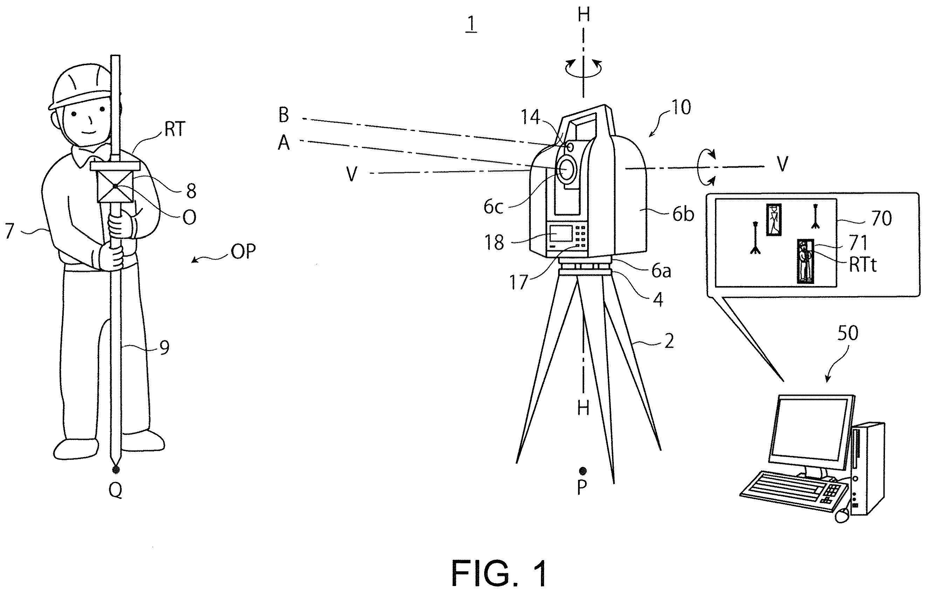

FIG. 1 is a schematic diagram illustrating use state of a surveying system 1 according to a first embodiment. The surveying system 1 includes a surveying instrument 10 and a data processing device 50

The surveying instrument 10 is a total station. The surveying instrument 10 includes a leveling portion 4 at the bottom, a base portion 6a installed on the leveling portion 4, a bracket portion 6b configured to rotate horizontally on the base portion 6a, and a telescope 6c configured to rotate vertically at the center in a recess of the bracket portion 6b. The telescope 6c has a camera 14 on a housing thereof. The camera 14 is configured to rotate integrally with the telescope 6c. The camera 14 has an optical axis B that is aligned horizontally with the collimation axis A of the telescope 6c and parallel to the collimation axis A in a vertical plane. The surveying instrument 10 is mounted on a tripod 2 at a known point P in use. The data processing device 50 is a computer configured to communicate with the surveying instrument 10.

During measurement, an operator OP carries a pole 9 with a prism 8 to a measurement point Q. At the measurement point Q, the operator OP holds pole 9 vertically while facing surveying instrument 10, makes the surveying instrument 10 automatically target the prism 8 to measure the distance to the center O of prism 8.

To lock the prism 8 within the narrow field of view of the telescope 6c, the surveying system 1 sets a preliminary target RT for preliminary rotation. The surveying system 1 acquires a wide-angle image (hereinafter simply referred to as "image") 70 of the area in front of the telescope 6c with camera 14. In this specification, "wide-angle" means that the angle of view is wider than the field of telescope 6c. Then, the surveying system 1 detects a person in the image 70 and outputs the area including the person detected as a candidate operator in a form of a bounding box 71. When the surveying system 1 detects the preliminary target RT in the area, the surveying system 1 determines that the preliminary target RT is a specified preliminary target RTt, which is held by the operator OP and is a target to be locked.

Then, the surveying system 1 calculates a preliminary rotation angle $\theta t$ for orienting the telescope 6c toward the direction of the specified preliminary target RTt based on the position of the specified preliminary target RTt in the image 70. The surveying system 1 makes the telescope 6c rotate by the preliminary rotation angle $\theta t$ to lock the prism 8 within the field of view of the telescope 6c. After that, the surveying system 1 automatically sights the prism 8 finely.

(Preliminary Target)

The preliminary target RT is a target of a preliminary rotation for orienting the telescope 6c toward the direction of the prism 8 approximately to automatically sight the prism 8 finely. In the illustrated example, a jacket 7 worn by a worker is set as a first preliminary target RT1.

The first preliminary target RT1 is not limited to the jacket 7. The first preliminary target RT1 may be anyone of wearable articles normally worn by an operator during surveying work, such as suits including a jacket and trousers, safety reflective vests, caps, or helmets. Alternatively, it may be a combination of two or more articles, such as a jacket 7 worn with a safety reflective vest. Though the jacket is, preferably, a dedicated jacket with a uniform size, design, and color scheme, it is not limited to.

(Details of Surveying System 1)

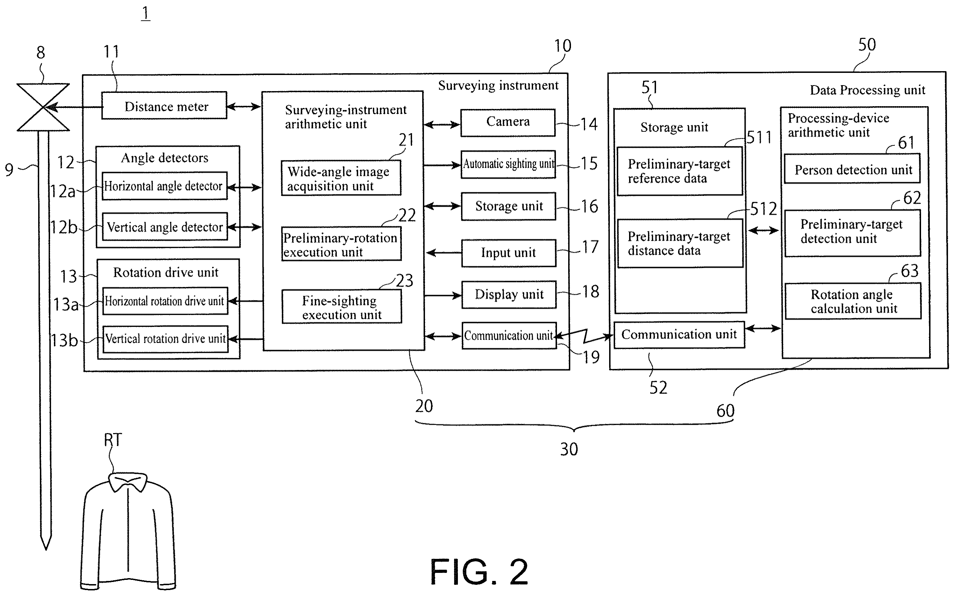

FIG. 2 is a block diagram of the surveying system 1. The surveying instrument 10 comprises a distance meter 11, angle detectors 12, rotation drive units 13, a camera 14, an automatic sighting unit 15, a storage unit 16, an input unit 17, a display unit 18, a communication unit 19, and a surveying-instrument arithmetic unit 20. The angle detectors 12 include a horizontal angle detector 12a and a vertical angle detector 12b. The rotation drive units 13 include a horizontal rotation drive unit 13a and a vertical rotation drive unit 13b.

The horizontal rotation drive unit 13a and the horizontal angle detector 12a are housed in the base portion 6a. The vertical rotation drive unit 13b, the vertical angle detector 12b, the storage unit 16, and the surveying-instrument arithmetic unit 20 are housed in the bracket portion 6b. The distance meter 11 and the automatic sighting unit 15 are integrated with the telescope 6c. The camera 14 is mounted in the housing of the telescope 6c at the upper part thereof.

The distance meter 11 is implemented using an electro-optical distance meter which comprises a light transmitting unit, a distance-measuring optical system, a reference light path, and a light receiving unit. The light transmitting unit includes a light emitting element such as a laser diode. The light receiving unit includes a light receiving element such as an avalanche photodiode. The distance meter 11 emits light, such as infrared laser light, as distance-measuring light, to the prism 8 along the collimation axis A of the telescope 6c via the distance-measuring optical system and receives reflected light with the light receiving unit. The light receiving unit also receives a part of the distance-measuring light as internal reference light via the reference light path. The distance meter 11 outputs light receiving signals of the distance-measurement light and internal reference light to the surveying-instrument arithmetic unit 20. The surveying-instrument arithmetic unit 20 calculates a distance from the instrument center of the surveying instrument 10 to the center O of the prism 8, based on phase difference or time difference between the distance-measuring light and the internal reference light.

The horizontal angle detector 12a and the vertical angle detector 12b are each implemented using rotary encoders. The horizontal angle detector 12a detects a rotation angle of the bracket portion 6b about a rotation axis and output it to the surveying-instrument arithmetic unit 20. The vertical angle detector 12b detects a rotation angle of the telescope 6c about a rotation axis and output it to the surveying-instrument arithmetic unit 20. The surveying-instrument arithmetic unit 20 calculates the horizontal and vertical angles of the collimation axis A, based on the detection signals of the horizontal angle detector 12a and the vertical angle detector 12b.

The horizontal rotation drive unit 13a and the vertical rotation drive unit 13b are each implemented using motors. The horizontal rotation drive unit 13a rotates the bracket portion 6b horizontally about the axis H-H under the control of the surveying-instrument arithmetic unit 20. The vertical rotation drive unit 13b also rotates the telescope 6c vertically about the axis V-V under the control of the surveying-instrument arithmetic unit 20.

The camera 14 is, for example, implemented with an RGB camera. The camera 14 includes an objective lens and an image sensor, such as a charge-coupled device (CCD) and a complementary metal-oxide-semiconductor (CMOS) sensor and is configured to acquire color images in front of the telescope 6c. The image sensor has an orthogonal coordinate system whose origin is the camera center $O_{14}$, and is configured so that the local coordinates of each pixel can be specified. The positional relationship between the camera center $O_{14}$ and the instrument center $O_{10}$ of the surveying instrument 10 is known. The surveying-instrument arithmetic unit 20 can convert the position of each pixel in the images acquired by the camera 14 into coordinates of surveying instrument 10 and handle them.

The camera 14 has wider angle of view than the field of view of the telescope 6c. For example, the field of view of the telescope 6c is 1.5°×1.5° (vertical × horizontal) while the angle of view of camera 14 is about10°×about15° (vertical × horizontal). However, as long as the field of view of camera 14 is wider than the field of view of telescope 6c, it is not limited to such values.

The automatic sighting unit 15 comprises: a sighting-light transmitting unit which includes a light emitting element such as a laser diode; a sighting optical system which includes a lens and a dichroic prism, etc.; a sighting-light receiving unit which includes an image sensor, such as CCD or CMOS sensor (this configuration is not illustrated in FIG. 2). The automatic sighting unit 15 emits sighting light having a wavelength different from that of the distance measuring light along an optical axis common with the distance measuring light and receives reflected light with the image sensor. The automatic sighting unit 15 acquires images of sighting direction when the sighting light is on and when the sighting light is off and output the images to the surveying-instrument arithmetic unit 20.

The image sensor is configured so that the position of each pixel on the light receiving surface (imaging surface) can be identified. Furthermore, the center of the image sensor is aligned with the optical axis of the distance measurement light, i.e., the collimation axis A of the telescope 6c. Determining the position of a pixel on the image sensor enables calculation of horizontal angle of the pixel with respect to the collimation axis A of the telescope 6c. The surveying-instrument arithmetic unit 20 specifies the center of the image of the prism 8 based on the difference between the images with the sighting light is on and off, calculate an angle of the center of the prism with respect to the collimation axis A of the telescope 6c, and drive the rotation drive units 13 to align the center O of the prism 8 with the collimation axis A based on the calculation result.

The storage unit 16 is implemented using computer-readable storage media, such as hard disc drives (HDDs), solid state drives (SSDs) or flash memory. The storage unit 16 stores programs for the surveying instrument 10 to execute various functions including the automatic locking function and relevant data.

The input unit 17 is implemented using operation buttons. An operator OP inputs commands for the surveying instrument 10 to execute operations or selects settings, via the input unit 17.

The display unit 18 is implemented using a display such as a liquid crystal display or an organic electro luminescence (OEL) display. The display unit 18 displays various information such as measurement results and calculation results. The input unit 17 and the display unit 18 may be integrated into a touch panel display.

The communication unit 19 is implemented using a communication interface that facilitates wired or wireless communication between the surveying instrument 10 and the data processing device 50. Examples of communication means include Wi-Fi, Bluetooth (a registered trademark), and infrared communication.

The surveying-instrument arithmetic unit 20 comprises at least one electronic circuit and at least one memory. The electronic circuit includes a processor such as a central processing unit (CPU). The memory includes, for example, a static random-access memory (SRAM) and a dynamic random-access memory (DRAM). When the electronic circuit includes a CPU, the surveying-instrument arithmetic unit 20 implements function of each functional unit of the surveying-instrument arithmetic unit 20 described later and the various functions of the surveying instrument 10 by the CPU reading out programs for implementing functions to the memory.

A part of the surveying-instrument arithmetic unit 20 may be configured with hardware such as a complex programmable logic device (CPLD), and a field programmable gate array (FPGA). The surveying-instrument arithmetic unit 20 connects with the distance meter 11, the angle detectors 12, the rotation drive units 13, the camera 14, the automatic sighting unit 15, the storage unit 16, the input unit 17, the display unit 18, and the communication unit 19 to control them and output/input information, so that the surveying instrument 10 can perform its functions.

The surveying-instrument arithmetic unit 20 comprises, as the functional units, a wide-angle image acquisition unit 21, a preliminary-rotation execution unit 22, and a fine-sighting execution unit 23.

The wide-angle image acquisition unit 21 controls the camera 14 to acquire an image 70 in front of the telescope 6c. The preliminary-rotation execution unit 22 drives the rotation drive units 13 to rotate the telescope 6c by the preliminary-rotation angle $\theta t$ calculated by the rotation-angle calculation unit 63. The fine-sighting execution unit 23 drives the automatic sighting unit 15 to finely sight the prism 8 which has entered the field of view of the telescope 6c by the preliminary rotation.

The data processing device 50 is a computer capable of communicating with the surveying instrument 10. The data processing device 50 comprises a processing-device arithmetic unit 60, storage unit 51, and a communication unit 52. In the example illustrated in FIG. 1, the data processing device 50 is implemented using a personal computer further comprising an input unit, such as a keyboard, and a display unit, such as a liquid crystal display. However, not limited thereto, the data processing device 50 may be implemented using a server computer or a cloud computer.

The processing-device arithmetic unit 60 comprises at least one electronic circuit and at least one memory. The electronic circuit includes a processor such as a CPU. The memory is implemented using memories such as SRAM and DRAM. When the electronic circuit is implemented using a CPU, the processing-device arithmetic unit 60 implements the various functions of the data processing device 50 by the CPU reading out programs for implementing functions to the memory. A part of the processing-device arithmetic unit 60 may be implemented with hardware such as CPLD, or FPGA.

The processing-device arithmetic unit 60 comprises, as functional units, a person detection unit 61, a preliminary-target detection unit 62, and the rotation-angle calculation unit 63.

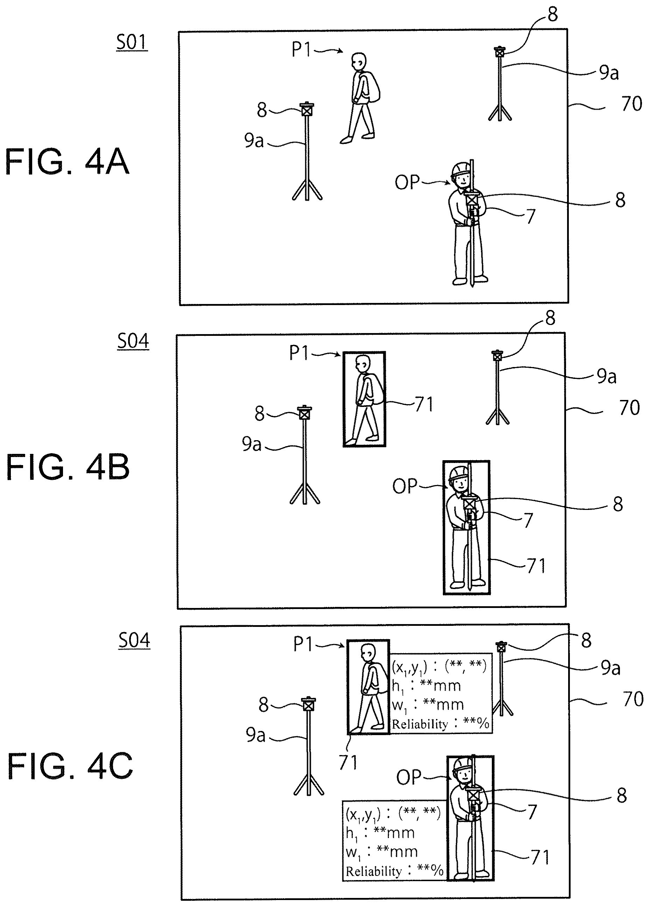

The person detection unit 61 analyzes the image 70, detects a person in the image 70 and outputs an area including the person detected as an operator candidate in the form of a bounding box 71 (FIGs. 4B, 4C). The preliminary-target detection unit 62 analyzes each of the bounding box 71 of the operator candidate, which is detected by the person detection unit 61, and detects the first preliminary target RT1 (jacket 7) in the bounding box 71.

The rotation-angle calculation unit 63 calculates the preliminary rotation angle $\theta t$ (vertical preliminary-rotation angle $\theta tv$, horizontal preliminary-rotation angle $\theta th$), based on the position of the first preliminary target RT1 in the image 70 to output it to the surveying-instrument arithmetic unit 20. The preliminary rotation angle $\theta t$ is an angle for orienting the telescope 6c from the current direction of the collimation axis A to the direction of the prism 8. Detailed configurations and operations of the functional units will be described later.

The storage unit 51 is implemented using computer readable storage media such as HDDs, SSDs, and flash memory. The storage unit 51 stores programs for executing functions of the above functional units. The storage unit 51 stores preliminary-target reference data (hereinafter, simply referred to as "reference data".) 511 and preliminary-target distance data 512. The preliminary-target reference data 511 is data to which the preliminary-target detection unit 62 refers for detecting the first preliminary target RT1. The preliminary-target distance data 512 represents a relative relationship between the dimensions of the first preliminary target RT1 in the image and the distance from the instrument center of the surveying instrument 10 to the first preliminary target RT1.

The communication unit 52 is implemented using the same type of communication interface as the communication unit 19 and allows the data processing device to communicate wired or wirelessly with the surveying instrument 10.

In this embodiment, the surveying-instrument arithmetic unit 20 and the processing-device arithmetic unit 60 cooperatively serve as a control arithmetic unit 30 of the surveying system 1, to execute the automatic locking function.

(Processing of Automatic Locking Function)

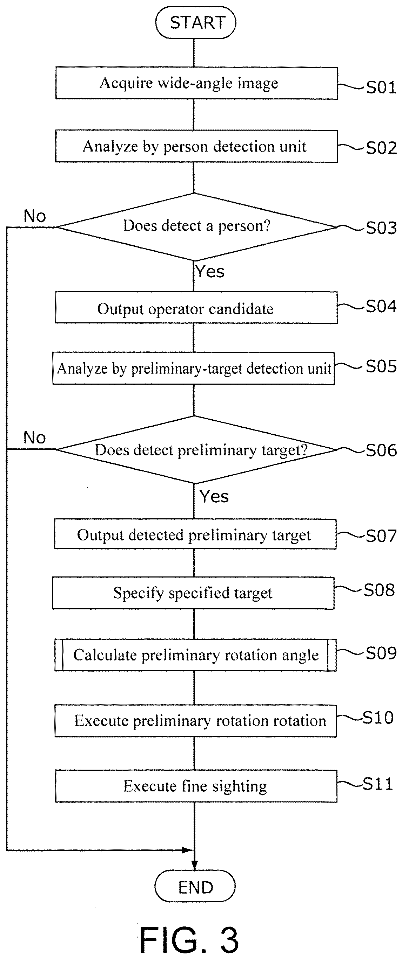

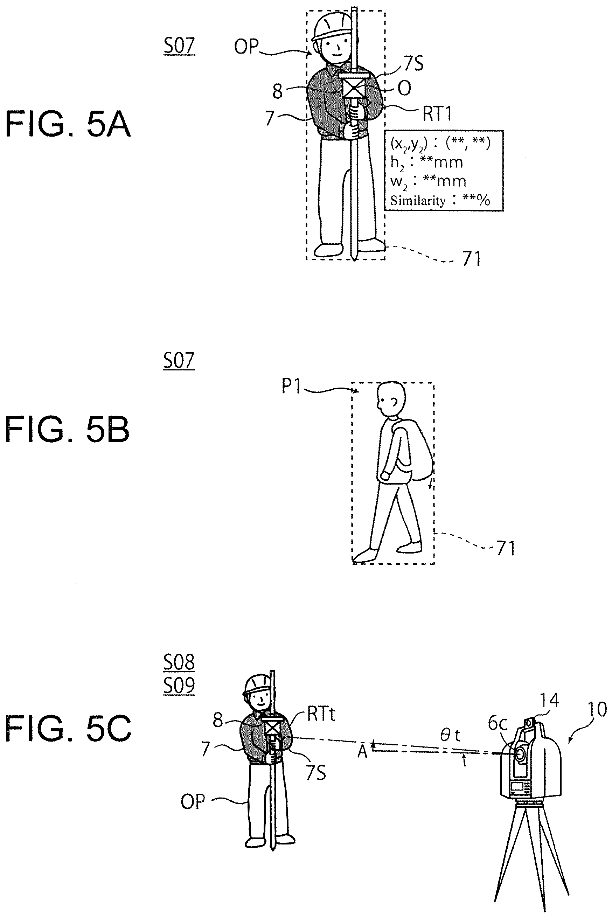

Next, processing of the automatic locking function will be described, FIG. 3 is a flowchart of processing of the automatic locking function. FIGs. 4A to 4C and FIGs. 5A to 5C illustrates processes in each step.

When starting the automatic locking function, in step S01, the wide-angle image acquisition unit 21 controls the camera 14 to acquire the image 70 in front of the telescope 6c. FIG. 4A illustrates an example of the image 70. The image 70 may include, for example, the prism 8 installed on a stand 9a and a person P1 who is not holding the prism 8 in addition to the operator OP who is holding the prism 8. The wide-angle image acquisition unit 21 outputs the acquired image 70 to the processing-device arithmetic unit 60.

Next, in step S02, the person detection unit 61 analyzes whether the image 70 includes a person. Person detection is achieved by using known algorithms. The person detection unit 61 may use a person detection model which is trained to detect a person using deep learning techniques, such as Region-based Convolutional Neural Network (R-CNN), Fast R-CNN, Mask R-CNN, and YOLO (You Only Look Once). Alternatively, the person detection unit 61 may use a classifier configured to detect people by combining image features, such as HoG or Haar-like, with boosting. For example, it is preferable to use YOLOv8. However, not limited thereto, the person detection can be achieved by using known pattern matching techniques that use human form as a pattern template.

In addition, in this embodiment, the person detection unit 61 is configured to detect the entire human body. However, not limited thereto, the person detection unit 61 may be configured to detect a part of the body, such as an upper body.

When the person detection unit 61 detects a person in step S03 (Yes), in step S04, the person detection unit 61 outputs the area enclosing the detected person as an operator candidate in the form of a bounding box 71, as illustrated by the bold line in FIG. 4B. At this time, the person detection unit 61 may also detect the person P1 in addition to the operator OP who is holding the prism 8.

In the illustrated example, the bounding box has a rectangle shape consisting of four sides parallel to the x-axis or y-axis. However, not limited thereto, the bounding box may have shapes other than rectangles, for example, polygons, ellipses, free-form shapes, etc. In view of the convenience for image processing, the bounding boxes are preferably rectangular.

As illustrated in FIG. 4C, the detection result for the operator candidate can include, for example, position information of the detected person and/or a reliability of the person detection. The reliability represents how certain the detection result is a person. The position information of the person may include the center coordinates $(x_1, y_1)$, the height $h_1$, and the width $w_1$ of the bounding box 71. The detection results of the operator candidates are stored in the storage unit 51.

Next, in stepS05, the preliminary-target detection unit 62 analyzes each of bounding boxes 71 for the operator candidates which has been output in step S04. In particular, the preliminary-target detection unit 62 analyzes whether the first preliminary target RT1 is present in the area of each bounding box 71 for the operator candidate.

The detection of the first preliminary target RT1 can be achieved by an object detection model using machine learning, such as R-CNN, Fast R-CNN, Mask R-CNN, YOLO, or a segmentation model.

The appropriate object detection model can be selected from these, based on necessary computing resources and data sets. The object detection model may be configured to detect an object by referring to the reference data 511 registered according to the type of the model used and output the positions and/or areas of the object, so as to detect the first preliminary target RT1 from the image 70.

For example, when the preliminary-target detection unit 62 uses a segmentation model that segments pixels in the image into object segments to which each pixel belongs, the storage unit 51 stores the average of features of the first preliminary target RT1, which is calculated based on an image of the first preliminary target RT1, as the reference data 511 ( Hereinafter, the average of the features is referred to as a reference feature.). The preliminary-target detection unit 62 segments the image 70 with the segmentation model, compares the feature of each pixel in the image 70 with the reference feature, to determine the segment which contains the most similar pixel as the first preliminary target RT1. The preliminary-target detection unit 62 can use the maximum value instead of the average. The Segment Anything Model provided by Meta is available as the segmentation model.

If the preliminary-target detection unit 62 uses a conventional object detection model, the preliminary-target detection unit 62 would require multiple images or image-based data of the first preliminary target RT1 obtained by changing the direction, distance, etc., as reference data. By contrast, the segmentation model described above only requires at least one reference data 511 as such model uses the average value of the features as the reference data 511, although using multiple reference data 511 obtained by changing directions, distances, etc., is advantageous in terms of improving accuracy.

Alternatively, not limited to the object detection model by machine learning, preliminary target detection may be implemented by using known pattern matching techniques that use image of the first preliminary target RT1 as a pattern template.

Next, in stepS06, when the preliminary-target detection unit 62 detects the first preliminary target RT1 (Yes), the preliminary-target detection unit 62 identifies the position and the area and in step S07, output the detection result of the jacket 7.

FIGs. 5A and 5B illustrate the output results of the analysis by the preliminary-target detection unit 62 on two bounding boxes 71 detected in FIGs. 4B and 4C. In the area (indicated by the bounding box 71) including a person P1 who does not wear the jacket 7 in FIG. 5B, the preliminary-target detection unit 62 does not detect the first preliminary target RT1. Whereas, in the area (indicated by the bounding box 71) including an operator OP wearing the jacket 7, the preliminary-target detection unit 62 detects the jacket as the first preliminary target RT1 and outputs in the form of a filled-in segment 7S.

This is just an example of the output format. The preliminary-target detection unit 62 may output in the form of a bounding box 72. In this case, the bounding box 72 has a rectangular shape composed of four sides parallel to the x-axis or y-axis. The shape is not limited to this, and it may be other shapes (polygons, ellipses, free-form shapes, etc.), though the rectangular shape is preferable for the convenience of image processing.

The detection results of the first preliminary target RT1 may include, for example, position information of the detected first preliminary target RT1, and information on the similarity between the detected first preliminary target RT1 and the reference data 551 of the first preliminary target RT1, as shown in FIG. 5A. The preliminary-target detection unit 62, which uses the above object detection model, calculates the similarity based on, for example, the comparison results between the average value of the feature of each pixel of the detected first approximate target RT1 and the reference feature quantities. Instead of the average value, the maximum value of the features may be used. The method for calculating the similarity is not limited to above, when the reference data 511 is an image data of the first preliminary target, known image similarity measurement methods, such as a method using average of the pixel values or a method using a histogram of the pixel values, are available.

The position information of the first preliminary target RT1 may include the center coordinates $(x_2, y_2)$, the height $h_2$, and the width $w_2$ of the segment 7S. The preliminary-target detection unit 62 determines the center of the segment 7S, for example, from the midpoint of the maximum and minimum x-coordinates and the midpoint of the maximum and minimum y-coordinates in segment 7S. The preliminary-target detection unit 62 stores the detection result of the first preliminary target RT1 in the storage unit 51. Also, the preliminary-target detection unit 62 displays the position information and similarity information superimposed on image 70, although this may be omitted.

Then, in step S08, the preliminary-target detection unit 62 determines the detected first preliminary target RT1 that has the highest similarity as the specified preliminary target. When only one first preliminary target RT1 is present in the image 70 as illustrated in FIG. 5A, the preliminary-target detection unit 62 may directly determine the detected preliminary target RT as the specified preliminary target RTt.

Next, in step S09, the rotation-angle calculation unit 63 calculates the preliminary-rotation angle $\theta t$ (vertical preliminary-rotation angle $\theta tv$, horizontal preliminary-rotation angle $\theta th$) for preliminary rotation of the telescope 6c from the current direction of the collimation axis A to the direction of the prism 8 based on the position of the first preliminary target RT1 in the image 70. The detailed processing for calculating the preliminary rotation angle is described later. The rotation-angle calculation unit 63 outputs the calculated preliminary rotation angle θt to the surveying-instrument arithmetic unit 20 via the communication units 52 and 19.

Next, in step S10, the preliminary-rotation execution unit 22 drives the rotation drive units 13 to rotate the telescope 6c by the preliminary rotation angle θt calculated in step S09 to the direction of the specified preliminary target RTt.

Then, in step S11, the fine-sighting execution unit 23 driving the automatic sighting unit 15 to make the telescope 6c finely sight the center O of the prism 8 and terminates the processing. Subsequent to the fine sighting, the surveying instrument 10 may start measurement. Alternatively, after locking the specified preliminary target RTt by this fine sighting, the surveying instrument 10 may start automatic tracking.

Furthermore, when the person detection unit 61 detects no person in step S03 (No) or the preliminary-target detection unit 62 detects no first preliminary target RT1 in step S06 (No), the process ends with an error.

(Details of Preliminary Rotation angle Calculation)

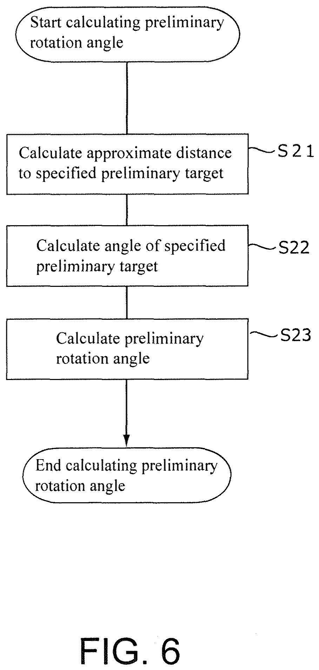

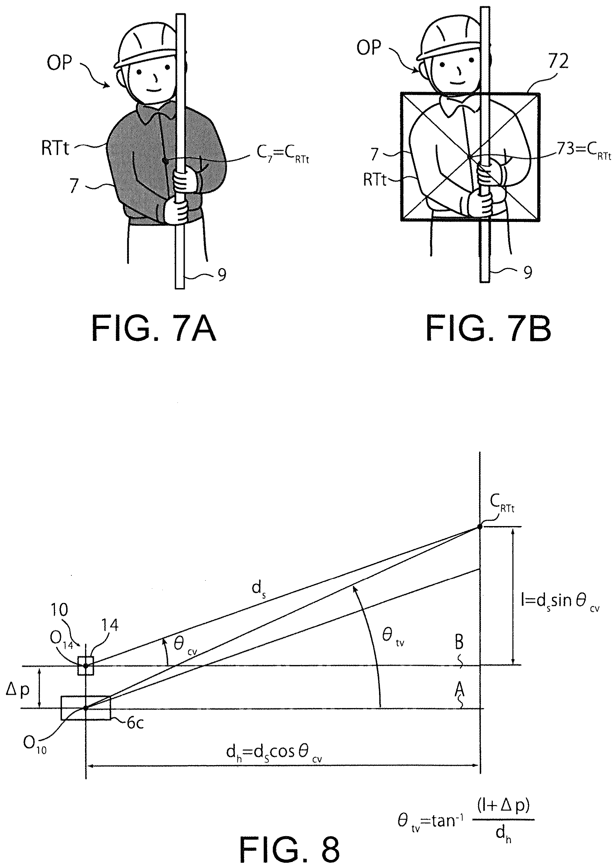

Next, referring to FIGs. 6 to 8, the details of the calculation of the preliminary rotation angle θt in step S09 will be described. For convenience of explanation, the prism 8 is omitted in FIGs. 7A and 7B. When the preliminary-rotation-angle calculation starts, in step S21, the rotation-angle calculation unit 63 calculates the approximate distance $d_s$ from the surveying instrument 10 to the specified preliminary target RTt based on the dimensions of the specified preliminary target RTt in the image 70 and the preliminary-target distance data 512.

Next, in step S22, the rotation-angle calculation unit 63 calculates the direction of the specified preliminary target RTt in the image 70 as an angle θc (θcv, θch) around the center $O_{10}$ of the surveying instrument 10. For example, when the detection result of the specified preliminary target RTt is output as a filled-in segment, the rotation-angle calculation unit 63 identifies the center $C_7$ of the segment 7S of the jacket 7 in FIG. 7A as the position $C_{RTt}$ of the specified preliminary target RTt. When the detection result is output as a bounding box 72, the rotation-angle calculation unit 63 may identify the center 73 of the bounding box 72 as the position $C_{RTt}$ of the specified preliminary target RTt.

Next, in step S23, the rotation-angle calculation unit 63 calculates the preliminary rotation angle θt for aligning the collimation axis A of the telescope 6c with the specified preliminary target RTt based on the position $C_{RTt}$ of the specified preliminary target RTt in the image 70 and the approximate distance $d_s$ to the specified preliminary target RTt.

Calculation of the horizontal preliminary-rotation angle θth is as follows. The optical axis B of the camera 14 is aligned with the collimation axis A of the telescope 6c in the horizontal direction. Accordingly, the rotation-angle calculation unit 63 can determine the angle of the specified preliminary target RTt relative to the optical axis B of the camera 14 (i.e., the collimation axis A of the telescope 6c) by calculating the position of the pixel of the specified preliminary target RTt on the image sensor. Therefore, the rotation-angle calculation unit 63 calculates the horizontal preliminary-rotation angle θth on the basis of the difference between the horizontal angle of the current direction of the collimation axis A of the telescope 6c and the horizontal angle θch of the specified preliminary target RTt.

Calculation of the vertical preliminary-rotation angle θtv is as follows. In FIG. 8, for the convenience of explanation, the telescope 6c and the camera 14 are depicted as being separated vertically. Moreover, it is assumed that the collimation axis A of the telescope 6c and the optical axis B of the camera 14 are horizontal. Also, it is assumed that the camera center $O_{14}$ is offset vertically by a distance Δp from the center of the telescope 6c. Then, the rotation-angle calculation unit 63 calculates the vertical preliminary-rotation angle θtv from an approximate horizontal distance dh calculated from the angle θc (θcv, θch) of the specified preliminary target RTt and the approximate distance $d_s$ to the specified preliminary target RTt using trigonometric functions, as shown in the following equation.

$$\theta tv = \tan^{-1}\{(l + \Delta p)/dh\} \quad (\text{Equation 1})$$

When the collimation axis A of the telescope 6c is not horizontal, it is possible to calculate in a similar way by taking the angular displacement from the horizontal (i.e., vertical angle) into account.

It is possible to configure the rotation-angle calculation unit 63 to use a known depth estimation model such as ZoeDepth to calculate the approximate distance $d_s$ of step S21, instead of calculating the approximate distance $d_s$ from the dimensions of the preliminary target. In this case, the preliminary-target distance data 512 is not necessary.

(Effects)

The surveying system 1 is configured such that the surveying instrument 10 includes a camera 14 which has a wider angle of view than the field of view of the telescope 6c, detects a person in the image 70, cuts out an area including the person, detects a jacket 7 as the preliminary target RT1 in the area, and calculate the preliminary rotation angle θt for rotating to the direction of the specified preliminary target RTt, so as to rotate preliminary for locking the specified preliminary target RTt.

According to the above configuration, only adding the camera 14 to the conventional surveying instrument allows quick and automatic sighting without the need for searching wide area with the automatic tracking unit. Only adding the camera 14 as a hardware allows addition of automatic locking function to the surveying instrument 10, thereby eliminating the need for expensive hardware such as remote controller using fan beams or GNSS receivers. This makes it possible to provide a surveying system with automatic locking functions at a relatively low cost.

In particular, detecting a person in the image 70, cutting out the area as an operator candidate by the person detection unit 61 and analyzing the area to detect the first preliminary target RT1 by the preliminary-target detection unit 62 enables more accurate detection with reduced false detection compared to the configuration to detect the first preliminary target RT1 directly from the image 70.

Furthermore, the person detection by the person detection unit 61 requires the image 70 including the entire body or upper body of a person to be detected. Therefore, the surveying system 1 is particularly effective at relatively long distances (e.g., 20 m or more, however depending on the angle of view of the camera used) where the image 70 can include the entire body or upper body of a person although not limited to this range.

Here, the position of the jacket 7, which is the specified preliminary target RTt, and the position of the prism 8 are not the same. However, at relatively long distances, as the telescope 6c can cover a wider range than that at close distances within the field of view, simply orienting the telescope 6c toward the specified preliminary target RTt is highly likely to acquire the prism 8 within the field of view of the telescope 6c, thereby advantageous.

The dimensions of the first preliminary target RT1 contribute to detection accuracy. The jacket 7 worn by an operator OP has dimensions of approximately 50 cm $\times$ 60 cm. It is a significant burden for the operator OP to just carry an object of the same size as the jacket together with the prism 8. In this embodiment, setting a wearable article worn by the operator as the first preliminary target RT1 allows to ensure detection accuracy without increasing the burden on the operator OP.

## 2. Second Embodiment

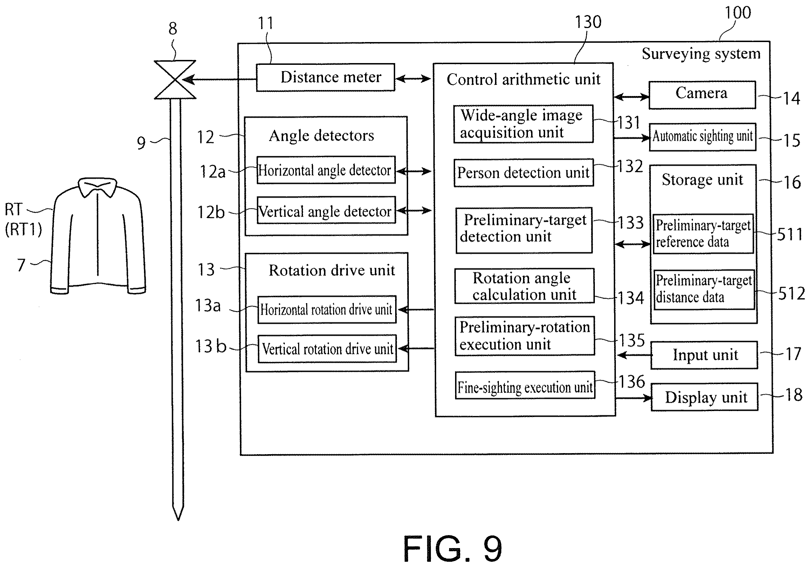

FIG. 9 is a configuration block diagram of the surveying system 100 according to the second embodiment. The surveying system 100 is implemented with a total station having the same mechanical configuration as the surveying instrument 10 of the surveying system 1 according to the first embodiment. The hardware configuration of the control arithmetic unit 130 is also the same as that of the surveying-instrument arithmetic unit 20 of the surveying instrument 10. However, the surveying system 100 is different in that the control arithmetic unit 130 includes a wide-angle image acquisition unit 131, a person detection unit 132, a preliminary-target detection unit 133, a rotation-angle calculation unit 134, a preliminary-rotation execution unit 135 and a fine-sighting execution unit 136 respectively corresponding to the wide-angle image acquisition unit 21, the person detection unit 61, the preliminary-target detection unit 62, the rotation-angle calculation unit 63, the preliminary-rotation execution unit 22 and a fine-sighting execution unit 23.

The surveying system 100 can achieve the same effect as the surveying system 1 even if it is configured as a single total station in this way.

## 3. Modification 1

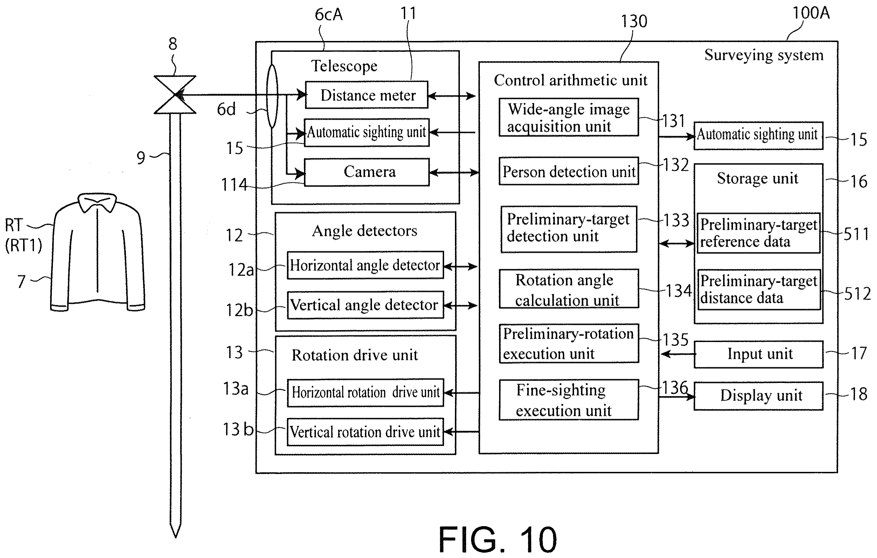

FIG. 10 is a block diagram of a surveying system 100A, which is a modification of the surveying system 100 according to the second embodiment. The surveying system 100A has the same configuration as the surveying system 100, except for the following points.

The surveying system 100 has the camera 14 on the upper portion of the housing of the telescope 6c, whereas the surveying system 100A has the camera 114 provided inside the telescope 6cA and the camera 114 has an optical axis coaxially with the collimation axis A of the telescope 6c.

In addition, the common objective lens 6d of telescope 6cA and camera 114 is equipped with a zoom function, allowing the angle of view to be adjusted between 1.5°$\times$1.5° (vertical $\times$ horizontal), which is equivalent to the field of view of the telescope 6c, and 10°$\times$15° (vertical $\times$ horizontal), which is equivalent to the angle of view of camera 14.

Configuring the camera 114 coaxially with the telescope 6cA in this way, allows to determine the vertical preliminary*rotation angle θtv by calculating the position of pixels on the image sensor of camera 114, similar to the horizontal preliminary rotation angle θth. Thereby, the calculation of the approximate distance $d_s$ in step S21 can be omitted. Additionally, this also can simplify the calculation process in step S23. Furthermore, providing camera 114 inside telescope 6cA achieves an additional advantage that the surveying system 100A can have a more compact appearance than the surveying system 100.

### 4. Modification 2

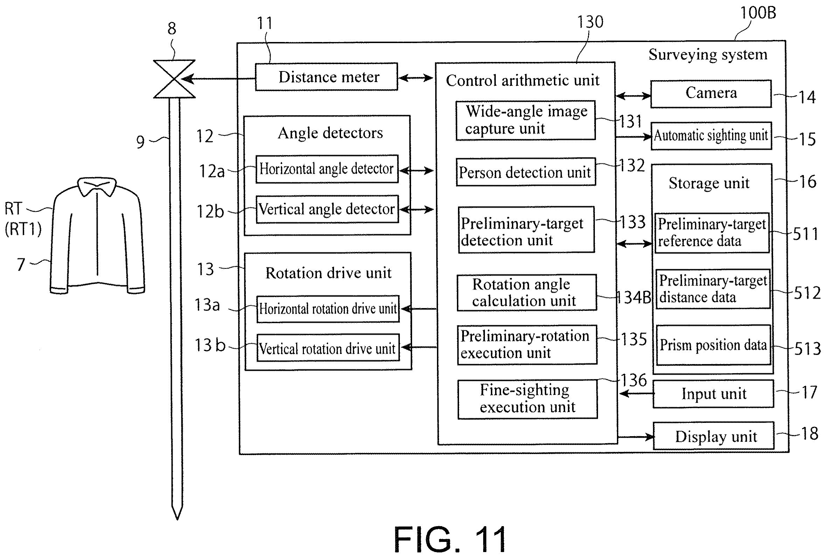

FIG. 11 is a configuration block diagram of the surveying system 100B according to another modification of the second embodiment. The surveying system 100B has the same configuration as the surveying system 100 except for including the rotation-angle calculation unit 134B instead of the rotation-angle calculation unit 134 and the storage unit 16 further having a prism position data 513 for estimating a prism position.

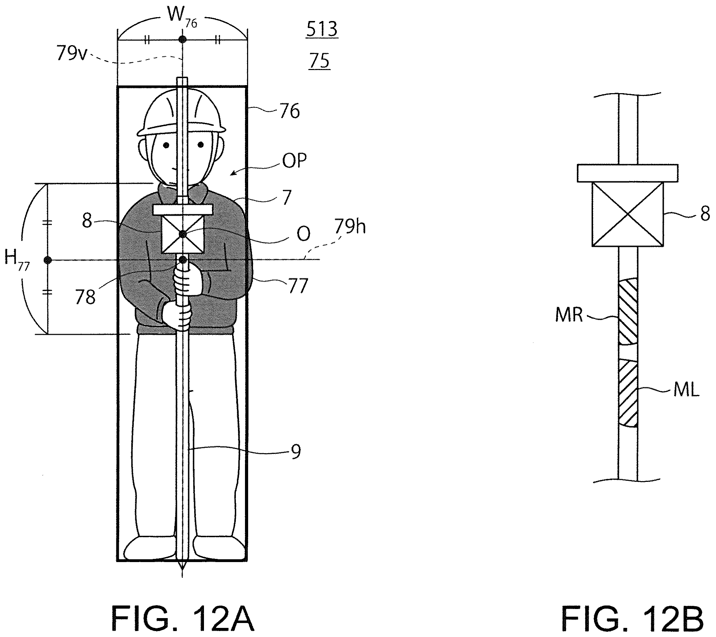

FIG. 12A illustrates an example of the prism position data 513. This is an example when the preliminary-target detection unit 133 uses the segmentation model. FIG. 12A illustrates an image 75 of the operator OP who is holding the prism 8 at the center of the jacket 7, shot with the camera 14 facing the operator OP. The prism position data 513 is data indicating the positional relationship between the operator OP and the center O of the prism 8 in the image 75. The storage unit 16 stores the positional relationship between the operator OP and the center O of the prism 8 as data indicating the positional relationship between the center 78 of the operator OP within a rectangle 76 surrounding the operator OP and the center O of prism 8, in the image 75. The center 78 of operator OP is set, for example, at the intersection of a horizontal (x-axis) center line 79h of rectangle 76 and a vertical (y-axis) center line 79v of the segment 77 of the jacket 7. The vertical center line 79v of the segment 77 of the jacket 7 is, for example, a line parallel to the x-axis passing through the center of the pixel with the maximum y-coordinate and the pixel with the minimum y-coordinate of segment 77. The setting of the center of the operator OP is not limited to this, and the center of the operator OP may also be set as the center of rectangle 76, for example.

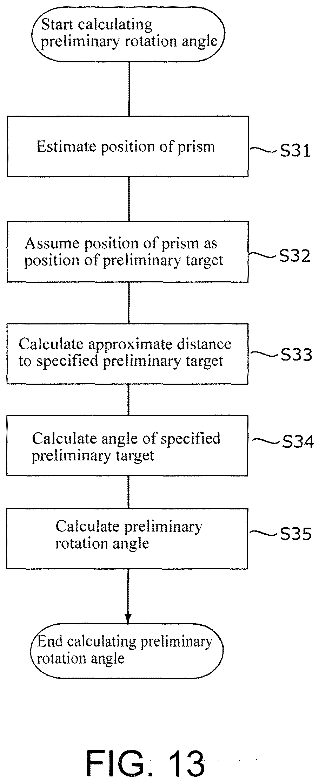

FIG. 13 is a flowchart of the preliminary rotation-angle calculation by the rotation-angle calculation unit 134B and it corresponds to FIG. 6. When the preliminary-rotation angle calculation starts, in step S31, the rotation-angle calculation unit 134B estimates the position O of the center of the prism 8 in the image 70 based on the prism position data 531. In particular, for example, the rotation-angle calculation unit 134B calculates the center of the operator OP who is holding specified preliminary target RTt in the image 70 in the same way from the bounding box 71 (FIG. 4B) and the segment 7S (FIG. 5A) corresponding to the specified preliminary target RTt, and estimates the position of the center O of the prism 8 from the dimension ratio (scale) of the bounding box 71 to the rectangle 76.

Next, in step S32, the rotation-angle calculation unit 134B designates the estimated position of the center O of the prism 8 as the position of the specified preliminary target RTt. The rotation-angle calculation unit 134B execute steps S33 to S35, reading the position $C_{RTt}$ of the specified preliminary target RTt as the position of the center O of the prism 8 in steps S21 to S23.

In this way, instead of assuming that the position of prism 8 is at the center $C_7$ of the segment 7S or at the center 73 of the bounding box 72, estimating the position of the center $O_8$ of the prism 8 in the bounding box 72 and using the estimated position in the calculation of the preliminary rotation angle also enable more accurate calculation of the preliminary rotation angle. For this purpose, as illustrated in FIG. 12B, the pole 9 may have guide marks $M_R$ and $M_L$ to guide the operator OP to the gripping position. Alternatively, the jacket may have guide marks indicating the holding position or holding posture. With such guide marks allows the operator OP to hold the prism 8 in a set posture reliably without requiring special attention, thereby reducing errors between the estimated position of the prism 8 and the actual position of the prism 8.

The above modification describes an example that the preliminary-target detection unit 133 uses a segmentation model. However, when the output detection results of the preliminary target are in the form of bounding boxes 72, for example, it is possible to treat the line parallel to the x-axis passing through the center of the bounding box 72 as the horizontal center line of the segment 77 in the above method to estimate the position of the center of the prism 8 in a similar manner. Furthermore, setting other wearable articles, such as a safety reflective belt, a helmet, and a cap, as the first preliminary target RT1 also allows estimation of the center position of the prism 8 in the similar manner.

### 5. Modification 3

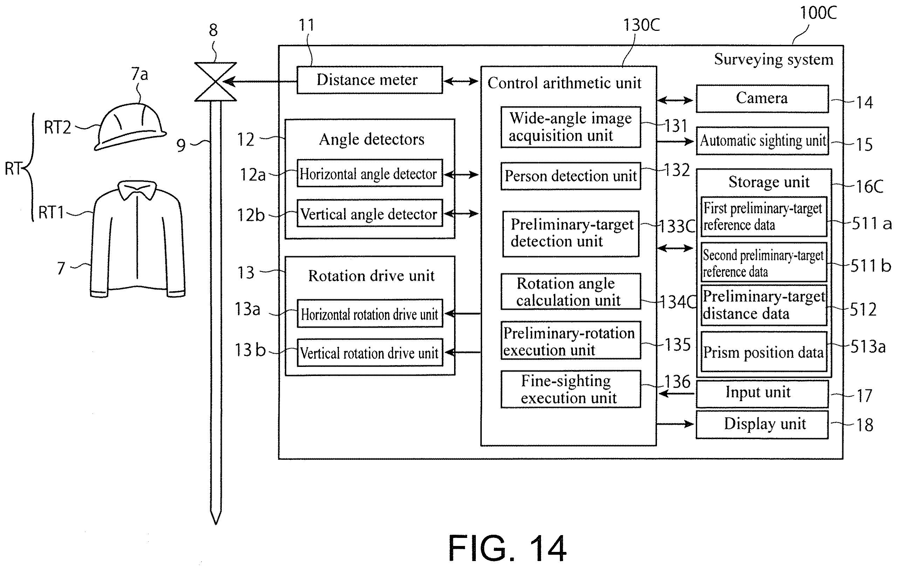

FIG. 14 is a block diagram of a surveying system 100C according to still another modification of the second embodiment. The surveying system 100C has a configuration generally similar to that of the surveying system 100B but differs in the following points. The preliminary target RT includes a second preliminary target RT2 in addition to the first preliminary target RT1. In this example, the second preliminary target RT2 is a cap 7a worn by an operator OP. However, the second preliminary target RT2 is not limited to the cap, and any article associated with the operator OP, such as a smartphone, that can be held in a certain relative position with respect to the first preliminary target RT1, which is the jacket 7, is available.

In addition, the storage unit 16C stores first and second preliminary-target reference data 511a and 511b, which respectively corresponds to the first and second preliminary targets RT1 and RT2, and preliminary-target distance data 512. Furthermore, similar to the surveying system 100B, the storage unit 16C stores the relative positional relationship among the first preliminary target RT1, the second preliminary target RT2, and the prism 8 held by the operator OP as prism position data 513a.

Additionally, the control arithmetic unit 130C comprises a preliminary-target detection unit 133C and a rotation-angle calculation unit 134C in place of the preliminary-target detection unit 133 and a rotation-angle calculation unit 134B. The preliminary-target detection unit 133C implemented with object detection models for separately detecting the first and second preliminary targets RT1 and RT2. The rotation-angle calculation unit 134C calculates the rotation angle based on the prism position data 513a.

Then, the preliminary-target detection unit 133C separately detects the first and second preliminary targets RT1 and RT2 with respect to the area of the operator candidate output by the person detection unit 61. Furthermore, the rotation-angle calculation unit 134C estimates the position of the center O of the prism 8 in the image 70 in the same manner as the surveying system 100B, based on the dimensions of the preliminary targets RT1 and RT2 and the prism position data 513a. Then, the rotation-angle calculation unit 134c calculates the preliminary rotation angle $\theta$t based on the estimated position of the center O of the prism 8. In particular, the rotation-angle calculation unit 134c calculates the preliminary rotation angle $\theta$t by reading the position $C_{RTt}$ of the specified preliminary target RTt in FIG. 8 as the center O of the prism 8.

In this way, setting a plurality of preliminary target RT improves the accuracy of estimating the position of the prism 8 from the positions of the preliminary targets RT, thereby enabling the telescope 6c to rotate more accurately toward the prism 8.

The modifications according to the above modifications 1 to 3 may apply to the surveying system 1 according to the first embodiment. In addition, any combinations of the modifications according to the above modifications 1 to 3 may apply to the surveying system 1 according to the first embodiment and the surveying system 100 according to the second embodiment.

6. Experiments

To verify the effects described in the first embodiment section, the inventors conducted experiments to compare detection accuracies of Working Example 1 including the person detection unit 61 with Comparative Example without the person detection unit 61.

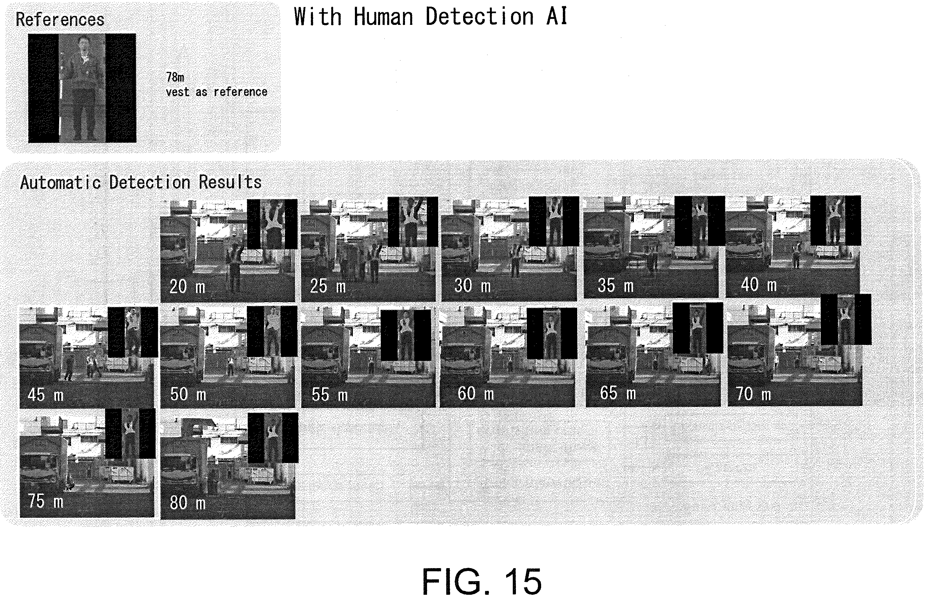

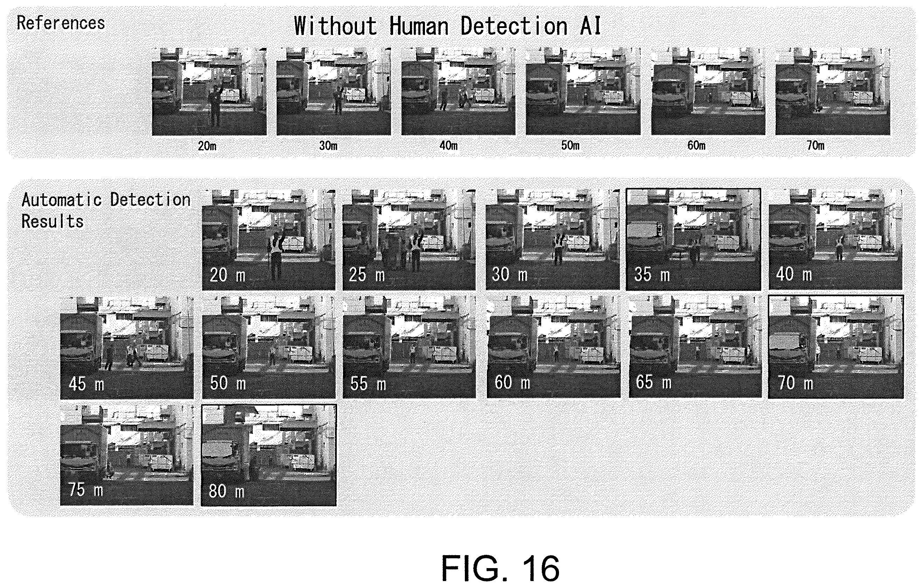

FIG. 15 shows the detection results of Working Example 1, and FIG. 16 shows the detection results of Comparative Example 1. In each figure, the upper row (Reference) presents an image corresponding to the reference data 511, and the lower row (Automatic Detection Results) presents the detection result of the first preliminary target RT1 at various distances. In the detection results of each figure, images enclosed by thick frames indicate false detections.

In Working Example 1, the safety reflective vest is set as the first preliminary target RT1 in the surveying system 1 according to the first embodiment. The safety reflective vest is made of wide, sash-shaped straps with retroreflective sheeting on the surface, which is composed of micro glass beads, for example. The safety reflective vest is a wearable article generally worn over work clothing during surveying operations. Such safety reflective vests are commercially available.

In addition, the person detection unit 61 is implemented using a person detection model that targets the entire human body, constructed using YOLOv8. The preliminary-target detection unit 62 is implemented using a segmentation model. Furthermore, the reference data 511 of the preliminary-target detection unit 62 is based on the image of the first preliminary target RT1 at the distance of 78m from the surveying instrument. The images 70 acquired by the camera 14 are processed in steps S01 to S07.

On the other hand, Comparative Example 1 presents the results of a comparative experiment conducted using a surveying system generally equivalent to that in Working Example 1, but the surveying system in Comparative Example 1 differs from that in Working Example 1 in being configured not to include a person detection unit to directly detect the first preliminary target from the image. In addition, the reference data for Comparative Example 1 was created using images of the first preliminary target (safety reflective vest) at various distances.

FIGs. 15 and 16 show the detection results of the first preliminary target RT1 when a worker holding a prism stands at distances of 20 to 80 m from the surveying instrument, using the surveying system of Working Example 1 and Comparative Example 1, respectively. The detection results are output in the form of filled segments. Images without a frame indicate correct detection, while images with thick frame indicate false detection.

FIG. 15 shows that the surveying system of Working Example 1 could detect the safety reflective vest, which was the first preliminary target RT1, at all distances. On the other hand, FIG. 16 shows that the surveying system of Comparative Example 1 falsely detected at 35 m, 70 m, and 80 m by filling out the front windshield of trucks on the left side of the images as the detection result instead of the safety vest. As mentioned above, preparing multiple reference data according to the distance contributes to the detection accuracy. Therefore, in Comparative Example 1, when using only one reference data as in Working Example 1, false detections would obviously increase.

Therefore, FIGs. 15 and 16 clearly show that the use of the person detection unit 61 improves the detection accuracy in detecting the first preliminary target.

Reference Signs List

1: Surveying System
6c, 6cA: Telescope
8: Prism
11: Distance meter
12: Angle detector
13: Rotation drive unit
14,114: Camera
30: Control arithmetic unit
70: (Wide-angle) image
76: Center
100, 100A, 100B, 100C: Surveying system
130, 130C: Control arithmetic unit
511, 511a, 511b: Reference data
513, 513a: Prism position data
551: Reference data
RT1: First preliminary target
RT2: Second preliminary target

**Claims**

1. A surveying system comprising:

   a distance meter integrated with a telescope and configured to transmit distance-measuring light to a prism and receive reflected light from the prism along with a collimation axis of the telescope, to measure a distance to a center of the prism;
   an angle detector configured to detect angle of the collimation axis;
   a rotation drive unit configured to rotate the telescope;
   a camera having a wider angle of view than a field of view of the telescope, and configured to acquire an image in front of the telescope; and
   a control arithmetic unit including at least one electronic circuit and at least one memory, and configured to calculate coordinates of the center of the prism based on the distance and angle detected; wherein
   the control arithmetic unit sets a wearable article worn by an operator as a first preliminary target, wherein the control arithmetic unit

      detects a person in the image to output an area including the person as a candidate of an operator who holds the prism,
      detects the first preliminary target in the area,
      calculate a preliminary rotation angle for preliminary orienting the telescope toward the prism based on a position of the first preliminary target in the image, and
      rotate the telescope by the preliminary rotation angle.

2. The surveying system according to claim1, wherein

   a relative positional relationship between the first preliminary target and the prism held by the worker is set as prism position data, and wherein
   the control arithmetic unit is configured to

      estimate a position of the prism in the image based on dimensions and a position of the first preliminary target in the image and the prism position data, and
      calculate the preliminary rotation angle based on the position of the prism estimated.

3. The surveying system according to claim 1 or 2, wherein the control arithmetic unit configured to

detect the first preliminary target in the image by using an object detection model generated by machine learning, output a similarity between the first preliminary target detected in the image and reference data of the first preliminary target, and
when detecting a plurality of the first preliminary target in the image, determine the first preliminary target having a highest similarity as the first preliminary target that is associated with the worker.

4. The surveying system according to claim 1, wherein

a second preliminary target different from the first preliminary target is set, and
a relative positional relationship among the first preliminary target, the second preliminary target and the prism held by the operator is set as the prism position data, and wherein
the control arithmetic unit is configured to

detect the second preliminary target in the area,
estimate a position of the prism in the image based on dimensions and positions of the first preliminary target and the second preliminary target in the image, and
calculate the preliminary rotation angle based on the position of the prism estimated.

5. A surveying method using a surveying system including a distance meter integrated with a telescope and configured to transmit distance-measuring light to a prism and receive reflected light from the prism along with a collimation axis of the telescope, to measure a distance to a center of the prism, an angle detector configured to detect angle of the collimation axis, a rotation drive unit configured to rotate the telescope, a camera having a wider angle of view than a field of view of the telescope, and configured to acquire an image in front of the telescope; and a control arithmetic unit including at least one electronic circuit and at least one memory, and configured to calculate coordinates of the center of the prism based on the distance and angle detected; the method comprising the steps of:

by the control arithmetic unit,
setting a wearable article worn by an operator as a first preliminary target;
detecting a person in the image to output an area including the person as a candidate of an operator who holds the prism;
detecting the first preliminary target in the area;
calculating a preliminary rotation angle for preliminary orienting the telescope toward the prism based on a position of the first preliminary target in the image; and
rotating the telescope by the preliminary rotation angle.

6. A program for causing a control arithmetic unit of a surveying system to perform the surveying method according to claim 5.

FIG. 1

EP 4 737 848 A1

FIG. 2

EP 4 737 848 A1

START

| Acquire wide-angle image | ~S01 |

| Analyze by person detection unit | ~S02 |

No ◇ Does detect a person? ◇ ~S03

Yes

| Output operator candidate | ~S04 |

| Analyze by preliminary-target detection unit | ~S05 |

No ◇ Does detect preliminary target? ◇ ~S06

Yes

| Output detected preliminary target | ~S07 |

| Specify specified target | ~S08 |

| Calculate preliminary rotation angle | ~S09 |

| Execute preliminary rotation rotation | ~S10 |

| Execute fine sighting | ~S11 |

END

# FIG. 3

FIG. 4A

FIG. 4B

FIG. 4C

FIG. 5A

FIG. 5B

FIG. 5C

Start calculating preliminary
rotation angle

Calculate approximate distance
to specified preliminary target ⌐~S21

Calculate angle of specified
preliminary target ⌐~S22

Calculate preliminary
rotation angle ⌐~S23

End calculating preliminary
rotation angle

# FIG. 6

# FIG. 7A

# FIG. 7B

$$l = d_s \sin \theta_{cv}$$

$$d_h = d_s \cos \theta_{cv}$$

## FIG. 8

$$\theta_{tv} = \tan^{-1} \frac{(l + \Delta p)}{d_h}$$

20

FIG. 9

FIG. 10

EP 4 737 848 A1

FIG. 11

EP 4 737 848 A1

FIG. 12A

FIG. 12B

```
        ╭─────────────────────────╮
        │ Start calculating       │
        │ preliminary rotation angle
        ╰─────────────────────────╯
                     │
        ┌─────────────────────────┐
        │ Estimate position of prism │ ～S31
        └─────────────────────────┘
                     │
        ┌─────────────────────────┐
        │ Assume position of prism as │ ～S32
        │ position of preliminary target │
        └─────────────────────────┘
                     │
        ┌─────────────────────────┐
        │ Calculate approximate distance │ ～S33
        │ to specified preliminary target │
        └─────────────────────────┘
                     │
        ┌─────────────────────────┐
        │ Calculate angle of specified │ ～S34
        │ preliminary target │
        └─────────────────────────┘
                     │
        ┌─────────────────────────┐
        │ Calculate preliminary │ ～S35
        │ rotation angle │
        └─────────────────────────┘
                     │
                     ▼
        ╭─────────────────────────╮
        │ End calculating preliminary │
        │ rotation angle │
        ╰─────────────────────────╯
```

# FIG. 13

FIG. 14

EP 4 737 848 A1

FIG. 15

FIG. 16

# EUROPEAN SEARCH REPORT

**Application Number**

EP 25 21 2396

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 4 112 824 A1 (TOPCON CORP [JP]) 4 January 2023 (2023-01-04) * paragraphs [0014], [0016], [0017], [0019], [0020], [0024], [0025], [0030], [0031], [0088]; figures 2A, 2B * | 1-6 | INV. G01C1/04 G01C15/00 G01S17/66 |
| Y | US 2020/056886 A1 (HORNUNG URLICH [CH] ET AL) 20 February 2020 (2020-02-20) * paragraphs [0020], [0029], [0045], [0058], [0063], [0064], [0069], [0084], [0098]; figures 1, 2, 5a, 5b * | 1-6 | |
| Y | US 2020/393237 A1 (NUKA KUNIYUKI [JP] ET AL) 17 December 2020 (2020-12-17) * paragraphs [0057], [0058], [0060], [0062], [0066]; figures 5A, 5B, 5C * | 1-6 | |
| A | US 8 830 452 B2 (TRIMBLE JENA GMBH [DE]) 9 September 2014 (2014-09-09) * figures 4D, 4K * | 1-6 | |

**TECHNICAL FIELDS SEARCHED (IPC)**

G01C
G01S

The present search report has been drawn up for all claims

| Place of search | Date of completion of the search | Examiner |
|---|---|---|
| The Hague | 4 March 2026 | Kuhn, Robert |

EPO FORM 1503 03.82 (P04C01)

## ANNEX TO THE EUROPEAN SEARCH REPORT
## ON EUROPEAN PATENT APPLICATION NO.

EP 25 21 2396

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2026

| Patent document cited in search report | | Publication date | Patent family member(s) | | Publication date |
|---|---|---|---|---|---|
| EP 4112824 | A1 | 04-01-2023 | EP | 4112824 A1 | 04-01-2023 |
| | | | JP | 7675569 B2 | 13-05-2025 |
| | | | JP | 2023000736 A | 04-01-2023 |
| | | | US | 2022404147 A1 | 22-12-2022 |
| US 2020056886 | A1 | 20-02-2020 | CN | 110850429 A | 28-02-2020 |
| | | | EP | 3614173 A1 | 26-02-2020 |
| | | | US | 2020056886 A1 | 20-02-2020 |
| US 2020393237 | A1 | 17-12-2020 | CN | 112099041 A | 18-12-2020 |
| | | | DE | 102020207453 A1 | 17-12-2020 |
| | | | JP | 7270477 B2 | 10-05-2023 |
| | | | JP | 2020204515 A | 24-12-2020 |
| | | | US | 2020393237 A1 | 17-12-2020 |
| US 8830452 | B2 | 09-09-2014 | CN | 103487039 A | 01-01-2014 |
| | | | DE | 102012011518 B3 | 17-10-2013 |
| | | | US | 2013329218 A1 | 12-12-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005214854 A

- JP 2016138802 A